# EUROPEAN PATENT SPECIFICATION

(11) **EP 4 091 841 B1**
(45) Date of publication and mention of the grant of the patent: **20.03.2024**
(21) Application number: 22174165.5
(22) Date of filing: 18.05.2022
(51) Int. Cl.: B60C 11/03, B60C 11/12

(54) **TIRE WITH A TREAD HAVING SIPES**
REIFEN MIT EINER LAUFFLÄCHE, DIE LAMELLEN AUFWEIST
PNEU DOTÉ D'UNE BANDE DE ROULEMENT COMPORTANT DES LAMELLES

(30) Priority: 21.05.2021 US 202117326476
(43) Date of publication of application: 23.11.2022
(73) Proprietor: The Goodyear Tire & Rubber Company, Akron, OH 44316 (US)
(72) Inventor: CARON, Arnaud, B-6750 Signeulx (BE); BHAGAVATHAPURAM SRISAILAPATHY, Ananth, L-9024 Ettelbruck (LU); FULOP, Tibor, L-9648 Erpeldange (LU)
(74) Representative: Kutsch, Bernd

(56) References cited:
- EP-A1- 1 207 057
- JP-A- 2001 063 318
- JP-A- 2006 182 279
- JP-A- 2011 088 539
- US-A- 5 679 186
- US-A1- 2020 016 936

## Description

### Field of the Invention

The present invention is directed to a tire and, in particular, a tire tread with narrow grooves or sipes in blocks or ribs of the tire tread.

### Background of the Invention

Conventionally, tread design optimization methods tend to impact wet and dry braking and traction in opposite directions. Decoupling/adding cuts may generally improve wet braking distance while higher stiffness/higher contact area may improve dry braking distance. A method for eliminating this trade-off and improving both wet and dry braking and traction would be desirable. A tread block design in accordance with the present invention may improve wet and dry braking distance and traction with tilted sipes combined with a chamfer.

JP 2001 063318 A describes a tire in accordance with the preamble of claim 1.

Other tires having a tread with various sipe arrangements and patterns are known from JP 2001 088539 A, US 2020/016936 A, JP 2006 182279 A and US 5,679,186 A.

EP 1 207 057 A discloses a tire tread having tread blocks with patterns of ducts that may be inclined in the tire radial direction.

### Summary of the Invention

The invention relates to a tire in accordance with claim 1.

Dependent claims refer to preferred embodiments of the invention.

Preferably, the tire is a pneumatic tire.

A tire tread in accordance with a preferred aspect of the present invention includes a middle or center rib formed by two circumferential main grooves extending along a tire circumferential direction, a first shoulder rib disposed axially outward from the center rib and one of the circumferential main grooves, and a second shoulder rib disposed axially outward from the center rib and the other of the two circumferential main grooves. The middle rib has a repeated group of three sipes: a first sipe being inclined radially inward a first angle relative to a radial direction, a second sipe being inclined radially inward a second angle relative to the radial direction, and a third sipe being inclined radially inward a third angle relative to the radial direction. The second angle is between -0.5 degrees and +0.5 degrees. The first and third angles are oppositely radially inclined to each other and the radial direction.

According to a preferred aspect of the tire tread, the first and third angles are equal and oppositely radially inclined to each other and the radial direction.

According to still another preferred aspect of the tire tread, the first shoulder rib has a second repeated group of three sipes: a first sipe being inclined radially inward a first angle relative to a radial direction, a second sipe being inclined radially inward a second angle relative to the radial direction, and a third sipe being inclined radially inward a third angle relative to the radial direction. The second angle are between -0.5 degrees and +0.5 degrees. The first and third angles are oppositely radially inclined to each other and the radial direction.

According to yet another preferred aspect of the tire tread, the second shoulder rib has a third repeated group of three sipes: a first sipe being inclined radially inward a first angle relative to a radial direction, a second sipe being inclined radially inward a second angle relative to the radial direction, and a third sipe being inclined radially inward a third angle relative to the radial direction. The second angle is between -0.5 degrees and +0.5 degrees. The first and third angles are oppositely radially inclined to each other and the radial direction.

According to still another preferred aspect of the tire tread, the first group, the second group, and the third group each have equal first, second, and third angles.

According to yet another preferred aspect of the tire tread, the first group and the third group each have equal first, second, and third angles.

According to still another preferred aspect of the tire tread, the first group and the second group each have equal first, second, and third angles.

According to yet another preferred aspect of the tire tread, the first group and the third group each have unequal first and third angles.

### Definitions

"Asymmetric tread" means a tread that has a tread pattern not symmetrical about the center plane or equatorial plane EP of the tire.

"Axial" and "axially" refer to lines or directions that are parallel to the axis of rotation of the tire.

"Circumferential" and "circumferentially" mean lines or directions extending along the perimeter of the surface of the annular tire parallel to the equatorial plane (EP) and perpendicular to the axial direction.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Radial" and "radially" mean directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Sipe" or "incision" means small slots molded into the tread elements of the tire that subdivide the tread surface and improve traction; sipes are designed to close when within the contact patch or footprint, as distinguished from grooves.

"Tread" means a molded rubber component which, when bonded to a tire casing, includes that portion of the tire that comes into contact with the road when the tire is normally inflated and under normal load.

### Brief Description of the Drawings

The accompanying drawings, which are incorporated in, and constitute a part of, this specification, illustrate examples of the present invention and, together with a general description of the present invention given above, and the detailed description given below, serve to explain the present invention.
FIG. 1 is a schematic orthogonal view of a tire tread in accordance with the present invention;
FIG. 2 is a schematic sectional view of part of the tire tread of FIG. 1;
FIG. 3 is another schematic sectional view of the tire tread of FIG. 1 under acceleration; and
FIG. 4 is still another schematic sectional view of the tire tread of FIG. 1 under braking.

### Description of Preferred Embodiments of the Present Invention

This description is made for the purpose of illustrating the general principles of the present invention. Further features of the example tire and tread are specified, for instance, in US-B-9,174,495.

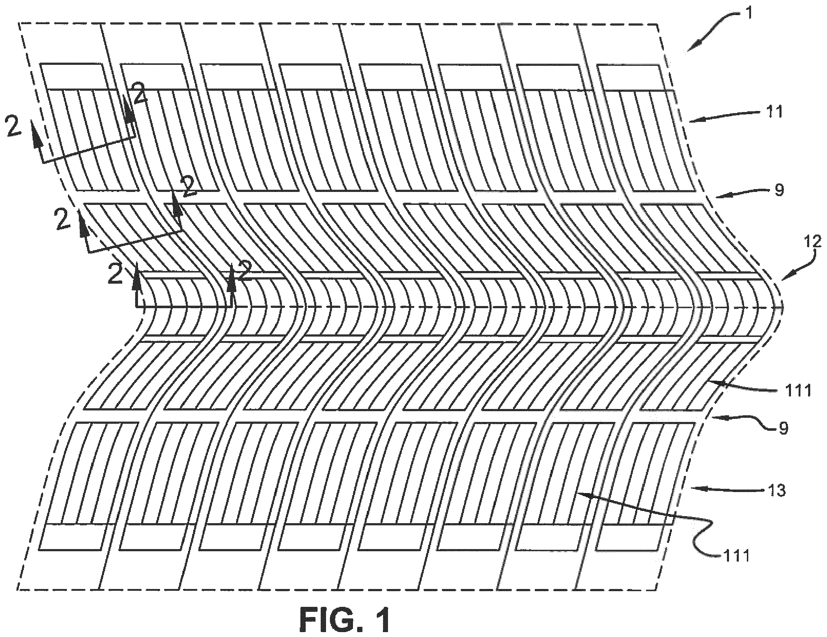

FIGS. 1-4 show an example pneumatic or non-pneumatic tire tread 1 having a contact surface 3, such as a road, and a first circumferential shoulder rib 11, a second circumferential center rib 12, and a third circumferential shoulder 13, each separated axially by a circumferential groove 9.

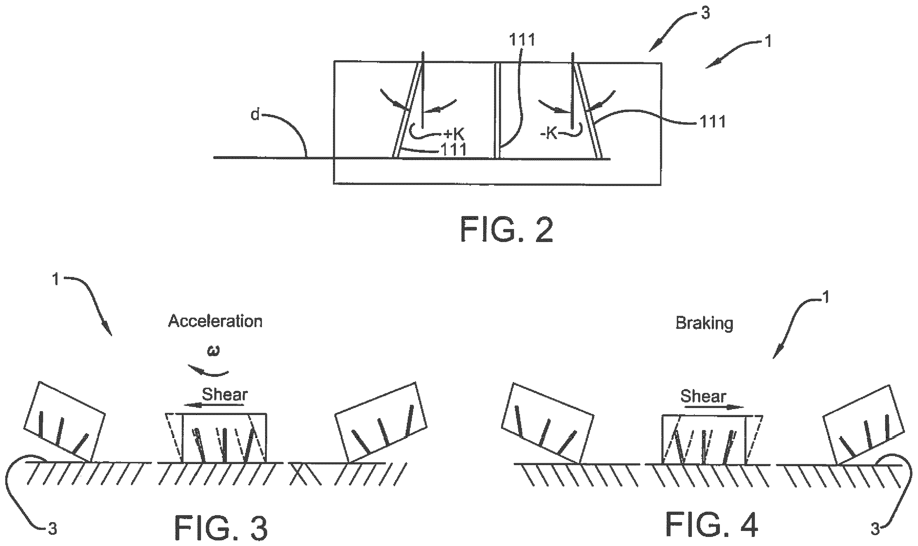

The first rib 11, the second rib 12, and the third rib 13 have axially extending sipes 111. The sipes 111 are preferably axially extending, angled in the direction of rotation, or angled opposite the direction of rotation (FIG. 2). The sipes 111 preferably have a circumferential thickness between 0.4 mm and 2.0 mm, more preferably between 0.4 mm and 1.0 mm. The sipes 111 preferably have axial lengths between 15.0 mm and 30.0 mm, or 17.0 mm and 26.0 mm, or between 21.0 mm and 23.0 mm, such as 21.5 mm. The sipes 111 preferably have radial depths between 6.0 mm and 12.0 mm.

As shown in FIG. 2, a group of three of the sipes 111 extends directly radially inward (middle sipe), radially inward (and circumferentially) at an angle +k to a radial depth d from the contact surface 3 (left sipe), and radially inward (and circumferentially) at an opposite angle -k to a radial depth d from the contact surface 3 (right sipe).

The value of angle k is between +17 degrees and +23 degrees, such as +20 degrees, and correspondingly between -17 degrees and -23 degrees, such as -20 degrees.

The radial depth d is preferably between 5.0 mm and 7.0 mm, or 5.5 mm and 6.5 mm, such as 6.0 mm.

Conventionally, tread design optimization for braking tends to impact wet and dry braking in opposite directions. A general trend is that lower tread stiffness improves wet braking, but penalizes dry braking. The above grouping of sipes 111 allows optimization of wet braking without the trade-off in dry braking.

FIG. 3 illustrates an example of the sipes 111 operating under accelerating conditions.

FIG. 4 illustrates an example of the sipes 111 operating under braking conditions.

In accordance with the present invention, this grouping of sipes 111 mitigates block stiffness locally and correspondingly enable block deformation locally. As seen FIGS. 3-4, the trailing edges at each sipe 111 (right edge in FIG. 3 and left edge in FIG. 4) is open and thereby increases the capacity to retain the snow during both acceleration and braking. Traction in both cases is thereby enhanced.

## Claims

1. A tire having a tread, the tread (1) comprising:
a center rib (12) formed by two circumferential main grooves (9) extending along the tire circumferential direction;
a first shoulder rib (11) disposed axially outward from the center rib (12) and one of the circumferential main grooves (9); and
a second shoulder rib (13) disposed axially outward from the center rib (12) and the other of the two circumferential main grooves (9);
the center rib (12) having a repeated first group of three sipes (111) that is repeated along the circumferential direction of the tire, each first group of three sipes (111) having a first sipe (111) being inclined radially inward under a first angle relative to the tire radial direction, a second sipe (111) being inclined radially inward under a second angle relative to the tire radial direction, and a third sipe (111) being inclined radially inward under third angle relative to the tire radial direction;
wherein the second angle is in a range of from -1 degrees to +1 degrees;
wherein the first sipe is inwardly angled circumferentially away from the second sipe;
wherein the third sipe is inwardly angled circumferentially away from the second sipe;
and wherein the first and third angles are oppositely radially inclined to each other and the radial direction;
**characterized in that** the first angle is in a range of from +17 to +23 degrees and **in that** the third angle is in a range of from -17 to -23 degrees.

2. The tire of claim 1 wherein the second angle is in a range of from -0.5 degrees to +0.5 degrees, with respect to the tire radial direction.

3. The tire as set forth in claim 1 or 2 wherein the first and third angles are equal but oppositely radially inclined to each other and the radial direction.

4. The tire as set forth in at least one of the previous claims wherein the first shoulder rib (11) has a second repeated group of three sipes (111) that is repeated along the circumferential direction of the tire, each second group of three sipes (111) having a first sipe (111) being inclined radially inward under a first angle relative to the tire radial direction, a second sipe (111) being inclined radially inward under a second angle relative to the tire radial direction, and a third sipe (111) being inclined radially inward under third angle relative to the tire radial direction, the second angle preferably being in a range of from -1 degrees to +1 degrees, more preferably in a range of from -0.5 degrees to +0.5 degrees, with respect to the tire radial direction, and the first and third angles preferably being oppositely radially inclined to each other and the radial direction.

5. The tire as set forth in at least one of the previous claims wherein the second shoulder rib (13) has a third repeated group of three sipes (111) that is repeated along the circumferential direction of the tire, each third group of three sipes (111) having a first sipe (111) being inclined radially inward under a first angle relative to the tire radial direction, a second sipe (111) being inclined radially inward under a second angle relative to the tire radial direction, and a third sipe (111) being inclined radially inward under third angle relative to the tire radial direction, the second angle preferably being in a range of from -1 degrees to +1 degrees, more preferably in a range of from -0.5 degrees to +0.5 degrees, with respect to the tire radial direction, and the first and third angles preferably being oppositely radially inclined to each other and the radial direction.

6. The tire as set forth in at least one of the previous claims wherein the first angle is in a range of from +19.5 degrees to +20.5 degrees; and/or wherein the third angle is in a range of from -19.5 degrees to -20.5 degrees.

## Patentansprüche

1. Reifen, der eine Lauffläche aufweist, wobei die Lauffläche (1) Folgendes umfasst:
eine Mittelrippe (12), die aus zwei umlaufenden Hauptrillen (9) gebildet wird, die sich entlang der Reifenumfangsrichtung erstrecken;
eine erste Schulterrippe (11), die axial außerhalb der Mittelrippe (12) und einer der umlaufenden Hauptrillen (9) angeordnet ist; und
eine zweite Schulterrippe (13), die axial außerhalb der Mittelrippe (12) und der anderen der beiden umlaufenden Hauptrillen (9) angeordnet ist;
wobei die Mittelrippe (12) eine sich wiederholende erste Gruppe von drei Lamellen (111) aufweist, die sich entlang der Umfangsrichtung des Reifens wiederholt, wobei jede erste Gruppe von drei Lamellen (111) eine erste Lamelle (111) aufweist, die radial nach innen unter einem ersten Winkel relativ zu der radialen Richtung des Reifens geneigt ist, eine zweite Lamelle (111), die radial nach innen unter einem zweiten Winkel relativ zu der radialen Richtung des Reifens geneigt ist, und eine dritte Lamelle (111), die radial nach innen unter einem dritten Winkel relativ zu der radialen Richtung des Reifens geneigt ist;
wobei der zweite Winkel in einem Bereich von -1 Grad bis +1 Grad liegt;
wobei die erste Lamelle in Umfangsrichtung von der zweiten Lamelle weg nach innen abgewinkelt ist;
wobei die dritte Lamelle in Umfangsrichtung von der zweiten Lamelle weg nach innen abgewinkelt ist;
und wobei der erste und der dritte Winkel radial zueinander und zur radialen Richtung entgegengesetzt geneigt sind;
**dadurch gekennzeichnet, dass** der erste Winkel in einem Bereich von +17 bis +23 Grad liegt und dass der dritte Winkel in einem Bereich von -17 bis -23 Grad liegt.

2. Reifen nach Anspruch 1, wobei der zweite Winkel in einem Bereich von -0,5 Grad bis +0,5 Grad in Bezug auf die radiale Richtung des Reifens liegt.

3. Reifen nach Anspruch 1 oder 2, wobei der erste und der dritte Winkel gleich, aber entgegengesetzt radial zueinander und zur radialen Richtung geneigt sind.

4. Reifen nach mindestens einem der vorhergehenden Ansprüche, wobei die erste Schulterrippe (11) eine zweite, sich wiederholende Gruppe von drei Lamellen (111) aufweist, die sich entlang der Umfangsrichtung des Reifens wiederholt, wobei jede zweite Gruppe von drei Lamellen (111) eine erste Lamelle (111), die radial nach innen unter einem ersten Winkel relativ zur radialen Richtung des Reifens geneigt ist, eine zweite Lamelle (111), die unter einem zweiten Winkel relativ zu der radialen Richtung des Reifens radial nach innen geneigt ist, und eine dritte Lamelle (111), die unter einem dritten Winkel relativ zu der radialen Richtung des Reifens radial nach innen geneigt ist, aufweist, wobei der zweite Winkel vorzugsweise in einem Bereich von -1 Grad bis +1 Grad liegt, mehr bevorzugt in einem Bereich von -0.5 Grad bis +0,5 Grad, in Bezug auf die radiale Richtung des Reifens, und der erste und der dritte Winkel vorzugsweise entgegengesetzt radial zueinander und zur radialen Richtung geneigt sind.

5. Reifen nach mindestens einem der vorhergehenden Ansprüche, wobei die zweite Schulterrippe (13) eine dritte, sich wiederholende Gruppe von drei Lamellen (111) aufweist, die sich entlang der Umfangsrichtung des Reifens wiederholt, wobei jede dritte Gruppe von drei Lamellen (111) eine erste Lamelle (111), die radial nach innen unter einem ersten Winkel relativ zur radialen Richtung des Reifens geneigt ist, eine zweite Lamelle (111), die unter einem zweiten Winkel relativ zu der radialen Richtung des Reifens radial nach innen geneigt ist, und eine dritte Lamelle (111), die unter einem dritten Winkel relativ zu der radialen Richtung des Reifens radial nach innen geneigt ist, aufweist, wobei der zweite Winkel vorzugsweise in einem Bereich von -1 Grad bis +1 Grad liegt, mehr bevorzugt in einem Bereich von - 0.5 Grad bis +0,5 Grad, in Bezug auf die radiale Richtung des Reifens, und der erste und der dritte Winkel vorzugsweise entgegengesetzt radial zueinander und zur radialen Richtung geneigt sind.

6. Reifen nach mindestens einem der vorhergehenden Ansprüche, wobei der erste Winkel in einem Bereich von +19,5 Grad bis +20,5 Grad liegt; und/oder wobei der dritte Winkel in einem Bereich von -19,5 Grad bis -20,5 Grad liegt.

## Revendications

1. Bandage pneumatique possédant une bande de roulement, la bande de roulement (1) comprenant :
une nervure centrale (12) formée par deux rainures principales circonférentielles (9) qui s'étendent dans la direction circonférentielle du bandage pneumatique ;
une première nervure d'épaulement (11) qui est disposée, dans la direction axiale, à l'extérieur de la nervure centrale (12) et d'une des rainures principales circonférentielles (9) ; et
une deuxième nervure d'épaulement (13) qui est disposée, dans la direction axiale, à l'extérieur de la nervure centrale (12) et de l'autre des deux rainures principales circonférentielles (9) ;
la nervure centrale (12) possédant un premier groupe répété de trois lamelles (111) qui est répété dans la direction circonférentielle du bandage pneumatique, chaque premier groupe de trois lamelles (111) possédant une première lamelle (111) qui est inclinée, dans la direction radiale, vers l'intérieur en formant un premier angle par rapport à la direction radiale du bandage pneumatique, une deuxième lamelle (111) qui est inclinée, dans la direction radiale, vers l'intérieur en formant un deuxième angle par rapport à la direction radiale du bandage pneumatique, et une troisième lamelle (111) qui est inclinée, dans la direction radiale, vers l'intérieur en formant un troisième angle par rapport à la direction radiale du bandage pneumatique ;
dans lequel le deuxième angle se situe dans une plage allant de -1 degré à +1 degré ;
dans lequel la première lamelle forme un angle orienté vers l'intérieur dans la direction circonférentielle par rapport à la deuxième lamelle ;
dans lequel la troisième lamelle forme un angle orienté vers l'intérieur dans la direction circonférentielle par rapport à la deuxième lamelle ;
et dans lequel le premier et le troisième angles présentent une inclinaison opposée dans la direction radiale l'un par rapport à l'autre et par rapport à la direction radiale ;
**caractérisé en ce que** le premier angle se situe dans une plage allant de +17 à+ 23 degrés et **en ce que** le troisième angle se situe dans une plage allant de -17 à -23 degrés.

2. Bandage pneumatique selon la revendication 1, dans lequel le deuxième angle se situe dans une plage allant de -0,5 degré à +0,5 degré par rapport à la direction radiale.

3. Bandage pneumatique tel que représenté dans la revendication 1 ou 2, le premier et le troisième angles sont égaux, mais présentent une inclinaison opposée dans la direction radiale l'un par rapport à l'autre et par rapport à la direction radiale.

4. Bandage pneumatique tel que représenté dans au moins une des revendications précédentes, dans lequel la première nervure d'épaulement (11) possède un deuxième groupe répété de trois lamelles (111) qui est répété dans la direction circonférentielle du bandage pneumatique, chaque deuxième groupe de trois lamelles (111) possédant une première lamelle (111) qui est inclinée, dans la direction radiale, vers l'intérieur en formant un premier angle par rapport à la direction radiale du bandage pneumatique, une deuxième lamelle (111) qui est inclinée, dans la direction radiale, vers l'intérieur en formant un deuxième angle par rapport à la direction radiale du bandage pneumatique, et une troisième lamelle (111) qui est inclinée, dans la direction radiale, vers l'intérieur en formant un troisième angle par rapport à la direction radiale du bandage pneumatique, le deuxième angle étant de préférence situé dans une plage allant de -1 degré à +1 degré, de manière plus préférée dans une plage allant de -0,5 degré à +0,5 degré, par rapport à la direction radiale, et le premier et le troisième angles présentant de préférence une inclinaison opposée dans la direction radiale l'un par rapport à l'autre et par rapport à la direction radiale.

5. Bandage pneumatique tel que représenté dans au moins une des revendications précédentes, dans lequel la deuxième nervure d'épaulement (13) possède un troisième groupe répété de trois lamelles (111) qui est répété dans la direction circonférentielle du bandage pneumatique, chaque deuxième groupe de trois lamelles (111) possédant une première lamelle (111) qui est inclinée, dans la direction radiale, vers l'intérieur en formant un premier angle par rapport à la direction radiale du bandage pneumatique, une deuxième lamelle (111) qui est inclinée, dans la direction radiale, vers l'intérieur en formant un deuxième angle par rapport à la direction radiale du bandage pneumatique, et une troisième lamelle (111) qui est inclinée, dans la direction radiale, vers l'intérieur en formant un troisième angle par rapport à la direction radiale du bandage pneumatique, le deuxième angle étant de préférence situé dans une plage allant de -1 degré à +1 degré, de manière plus préférée dans une plage allant de -0,5 degré à +0,5 degré, par rapport à la direction radiale, et le premier et le troisième angles présentant de préférence une inclinaison opposée dans la direction radiale l'un par rapport à l'autre et par rapport à la direction radiale.

6. Bandage pneumatique tel que représenté dans au moins une des revendications précédentes, dans lequel le premier angle se situe dans une plage allant de +19,5 à+ 20,5 degrés ; et/ou dans lequel le troisième angle se situe dans une plage allant de -19,5 à -20,5 degrés.
